(19) Europäisches Patentamt / European Patent Office / Office européen des brevets

(11) **EP 4 330 965 B1**

(12) **EUROPEAN PATENT SPECIFICATION**

(45) Date of publication and mention of the grant of the patent:
**22.04.2026 Bulletin 2026/17**

(21) Application number: **22724184.1**

(22) Date of filing: **27.04.2022**

(51) International Patent Classification (IPC):
*G10L 17/00* (2013.01)   *G10L 17/06* (2013.01)
*G10L 17/02* (2013.01)   *G10L 25/84* (2013.01)
*G10L 17/18* (2013.01)

(52) Cooperative Patent Classification (CPC):
**G10L 25/84; G10L 17/02; G10L 17/06;** G10L 17/00;
G10L 17/18

(86) International application number:
**PCT/US2022/026552**

(87) International publication number:
**WO 2022/232284 (03.11.2022 Gazette 2022/44)**

(54) **SPEAKER DIARIZATION SUPPORTING EPOSODICAL CONTENT**

SPRECHERDIARISIERUNG ZUR UNTERSTÜTZUNG EPOSODIEINHALTES

DIARISATION DE LOCUTEUR SUPPORTANT UN CONTENU ÉPISODIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2021 US 202163182338 P**

(43) Date of publication of application:
**06.03.2024 Bulletin 2024/10**

(73) Proprietor: **Dolby Laboratories Licensing
Corporation
San Francisco, CA 94103 (US)**

(72) Inventors:
• **FANELLI, Andrea**
  **San Francisco, California 94103 (US)**
• **YUN, Mingqing**
  **San Francisco, California 94103 (US)**
• **PANKEY, Satej Suresh**
  **San Francisco, California 94103 (US)**
• **ENGEL, Nicholas Laurence**
  **San Francisco, California 94103 (US)**
• **CRUM, Poppy Anne Carrie**
  **Oakland, California 94611 (US)**

(74) Representative: **Dolby International AB
Patent Group Europe
77 Sir John Rogerson's Quay
Block C
Grand Canal Docklands
Dublin, D02 VK60 (IE)**

(56) References cited:
WO-A1-2020/068056     US-A1- 2016 217 792
US-A1- 2020 349 230

• KANG WONJUNE ET AL: "Multimodal Speaker Diarization of Real-World Meetings Using D-Vectors With Spatial Features", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 6509 - 6513, XP033792775, [retrieved on 20200401], DOI: 10.1109/ICASSP40776.2020.9053122

**Description**

**CROSS-REFERENCE TO RELATED APPLICATION**

This application claims priority of U.S. Provisional Application 63/182,338 filed April 30, 2021.

**TECHNICAL FIELD**

This disclosure relates generally to audio signal processing, and more particularly to speaker diarization.

**BACKGROUND**

Speaker diarization is a process of partitioning an input audio stream containing speech of multiple individuals into homogeneous segments associated with each speaker. Speaker diarization is used in many applications such as understanding recorded conversations, video captioning and the like. Speaker diarization is different than speaker identification or speaker separation because speaker diarization does not require a "fingerprint" of the speaker's voice or *apriori* knowledge of the number of speakers present in the input audio stream. Additionally, speaker diarization is different than source separation because speaker diarization is not typically applied to overlapping speech.

US2016/0217792 discloses methods of diarizing audio data using first-pass blind diarization and second-pass blind diarization that generate speaker statistical models, wherein the first pass-blind diarization is on a per-frame basis and the second pass-blind diarization is on a per-word basis, and methods of creating acoustic signatures for a common speaker based only on the statistical models of the speakers in each audio session. US2020/0349230 discloses systems and methods for providing customized output based on a user preference in a distributed system. In example embodiments, a meeting server or system receives audio streams from a plurality of distributed devices involved in an intelligent meeting. The meeting system identifies a user corresponding to a distributed device of the plurality of distributed devices and determines a preferred language of the user. A transcript from the received audio streams is generated. The meeting system translates the transcript into the preferred language of the user to form a translated transcript. The translated transcript is provided to the distributed device of the user.

**SUMMARY**

Embodiments are disclosed for speaker diarization supporting episodical content.

In some embodiments, a method comprises: receiving, with at least one processor, media data including one or more utterances; dividing, with the at least one processor, the media data into a plurality of blocks; identifying, with the at least one processor, segments of each block of the plurality of blocks associated with a single speaker; extracting, with the at least one processor, embeddings for the identified segments in accordance with a machine learning model, wherein extracting embeddings for identified segments further comprises statistically combining extracted embeddings for identified segments that correspond to a respective continuous utterance associated with a single speaker; clustering, with the at least one processor, the embeddings for the identified segments into clusters; assigning, with the at least one processor, a speaker label to each of the embeddings for the identified segments in accordance with a result of the clustering; and outputting, with the at least one processor, speaker diarization information associated with the media data based in part on the speaker labels.

In some embodiments, before dividing the media data into a plurality of blocks, a spatial conversion on the media data. is performed.

In some embodiments, performing the spatial conversion on the media data comprises: converting a first plurality of channels of the media data into a second plurality of channels different than the first plurality of channels; and dividing the media data into a plurality blocks includes independently dividing each of the second plurality of channels into blocks.

In some embodiments, in accordance with a determination that the media data corresponds to a first media type, the machine learning model is generated from a first set of training data; and in accordance with a determination the first media data corresponds to a second media type different than the first media type, the machine learning model is generated from a second set of training data different than the first set of training data.

In some embodiments, prior to clustering, and in accordance with determining that an optimization criteria is met, the extracted embeddings for the identified segments are further optimized.

In some embodiments, prior to clustering, and in accordance with determination that an optimization criteria is not met, further optimizing the extracted embeddings for the identified segments is foregone.

In some embodiments, optimizing the extracted embeddings for identified segments includes performing at least one of dimensionality reduction of the extracted embeddings or embedding optimization of the extracted embeddings.

In some embodiments, embedding optimization includes: training the machine learning model for maximizing separability between the extracted embeddings for identified segments; and updating the extracted embeddings by applying the machine learning model for maximizing the separability between the extracted embeddings for identified segments to the extracted embeddings identified segments.

In some embodiments, the clustering comprises: for each identified segment: determining a respective length of the segment; in accordance with a determination that the respective length of the segment is greater than a threshold length, assigning the embeddings associated with the respective identified segment according to a first clustering process; and in accordance with a determination that the respective length of the segment is not greater than a threshold length, assigning the embeddings associated with the respective identified segment according to a second clustering process different from the first clustering process.

In some embodiments, any of the foregoing methods further comprise: selecting a first clustering process from a plurality of clustering processes based in part on a determination of a quantity of distinct speakers associated with the media data.

In some embodiments, the first clustering process includes spectral clustering.

In some embodiments, the media data includes a plurality of related files.

In some embodiments, the method further comprises: selecting a plurality of the related files as the media data, wherein selecting the plurality of related files is based in part on at least one of: a content similarity associated with the plurality of related files; a metadata similarity associated with the plurality of related files; or received data corresponding to a request to process a specific set of files.

In some embodiments, the machine learning model is selected from a plurality of machine learning models in accordance with one or more properties shared by each of the plurality of related audio files.

In some embodiments, the method further comprises: computing a voiceprint distance metric between a voiceprint embedding and a centroid of each cluster; computing a distance from each centroid to each embedding belonging to that cluster; computing, for each cluster, a probability distribution of the distances of the embeddings from the centroid for that cluster; for each probability distribution, computing a probability that the voiceprint distance belongs to the probability distribution; ranking the probabilities; assigning the voiceprint to one of the clusters based on the ranking; and combining a speaker identity associated with the voiceprint with the speaker diarization information.

In some embodiments, the probability distributions are modeled as folded Gaussian distributions.

In some embodiments, the method further comprises: comparing each probability with a confidence threshold; and determining if a speaker associated with a probability has spoken based on the comparing.

In some embodiments, any of the preceding methods further comprise generating one or more analytics files or visualizations associated with the media data based in part on the assigned speaker labels.

In some embodiments, a non-transitory computer-readable storage medium stores at least one program for execution by at least one processor of an electronic device, the at least one program including instructions for performing any of the methods described above.

In some embodiments, a system comprises: at least one processor; and a memory coupled to the at least one processor storing at least one program for execution by the at least one processor, the at least one program including instructions for performing any of the methods described above.

Particular embodiments disclosed herein provide at least one or more of the following advantages: 1) an optimized architecture for speaker diarization, improved over standard diarization structures of pre-existing architectures; 2) introduction of a preprocessing step to leverage the spatial information present in stereo files before conversion to mono; 3) introduction of an embeddings optimization step to maximize embeddings separation and improve clustering based on a multi-head attention architecture or VBx clustering; 4) introduction of spectral clustering as an improved component in the pipeline; 5) introduction of a double clustering step to improve reliability of clustering and misclassification of short speaker segments; 6) ability to perform diarization on files of any length with a resulting smaller memory occupation and processing load; 7) ability to perform diarization over different files, thus allowing diarization over episodical content; 8) statistics generation, error quantifications and visualizations to easily evaluate the diarization success; and 9) a diarization pipeline that uses an input voiceprint to determine if an audio file contains speech from that person.

## BRIEF DESCRIPTION OF DRAWINGS

In the drawings, specific arrangements or orderings of schematic elements, such as those representing devices, units, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths, as may be needed, to affect the communication.

FIG. 1 is a block diagram of a speaker diarization processing pipeline, according to an embodiment.

FIG. 2 a flow diagram illustrating how the different components of the pipeline shown in FIG. 1 work on an audio file, according to an embodiment.

FIG. 3 is an embeddings representation of a segment of audio containing four speakers, after dimensionality reduction to two dimensions, according to an embodiment.

FIG. 4A is a flow diagram of a process in the pipeline shown in FIG. 1, which provides speaker change detection and overlapped speech detection, using cross-entropy loss and binary classification models, according to an embodiment.

FIG. 4B is a flow diagram 400b in pipeline 100, which can solve the embeddings extraction process using triplet loss.

FIG. 5A is a flow diagram for processing stereo files in a diarization pipeline, according to an embodiment.

FIG. 5B is a flow diagram for an alternative processing of stereo files in a diarization pipeline, according to an embodiment.

FIG. 6 illustrates block segmentation and episodical content diarization, according to an embodiment.

FIG. 7 illustrates multi-head attention plus GE2E loss function, according to an embodiment.

FIG. 8 is a flow diagram of a double clustering process, according to an embodiment.

FIG. 9 illustrates determining distances between a voiceprint embedding and centroids of clusters identified by the diarization pipeline, according to an embodiment.

FIG. 10 illustrates approximating distances of the centroids from the embeddings belonging to the cluster as folded-gaussian distributions, according to an embodiment.

FIG. 11 illustrates ranking probability to identify which cluster has the highest probability to include the voiceprint, according to an embodiment.

FIG. 12 illustrates associating the speaker to the voiceprint talked by joining a speaker identification (ID) result with the diarization pipeline output, according to an embodiment.

FIG. 13 illustrates diarization performance for speech segments for two speakers with ground truth as a baseline, according to an embodiment.

FIG. 14 illustrates the speech segment of each speaker represented in FIG. 13, according to an embodiment.

FIG. 15 is a flow diagram of a process of speaker diarization supporting episodical content, according to an embodiment,

FIG. 16 is a block diagram of an example device architecture for implementing the features and processes described in reference to FIGS. 1-15, according to an embodiment.

The same reference symbol used in various drawings indicates like elements.

**DETAILED DESCRIPTION**

In the following detailed description, numerous specific details are set forth to provide a thorough understanding of the various described embodiments. It will be apparent to one of ordinary skill in the art that the various described embodiments may be practiced without these specific details. In other instances, well-known methods, procedures, components, and circuits, have not been described in detail so as not to unnecessarily obscure aspects of the embodiments. Several features are described hereafter that can each be used independently of one another or with any combination of other features.

*Nomenclature*

As used herein, the term "includes" and its variants are to be read as open-ended terms that mean "includes, but is not limited to." The term "or" is to be read as "and/or" unless the context clearly indicates otherwise. The term "based on" is to be read as "based at least in part on." The term "one example embodiment" and "an example embodiment" are to be read as "at least one example embodiment." The term "another embodiment" is to be read as "at least one other embodiment." The terms "determined," "determines," or "determining" are to be read as obtaining, receiving, computing, calculating, estimating, predicting or deriving. In addition, in the following description and claims, unless defined otherwise, all technical and scientific terms used herein have the same meaning as commonly understood by one of ordinary skills in the art to which this disclosure belongs.

*Example System*

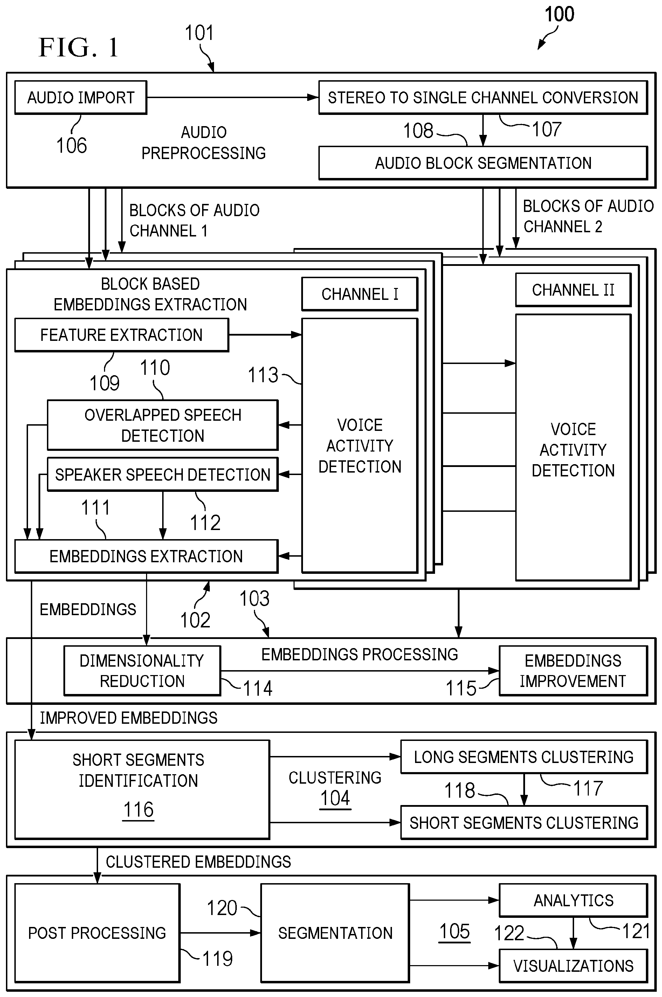

FIG. 1 is a block diagram of diarization processing pipeline 100, according to an embodiment. Diarization pipeline 100 is characterized by five main components: audio preprocessing component 101, block-based embeddings extraction component 102, embeddings processing component 103, clustering component 104 and post-processing component 105.

Diarization pipeline 100 takes as input media data (e.g., a mono or stereo audio file 106) containing utterances (e.g., speech) and returns as output corresponding segments (e.g., speech segments) with an associated tag for each speaker detected in the audio file. In an embodiment, diarization pipeline 100 also outputs analytics 121 and visualizations 120 to provide a clear way to present results of the diarization to users. For example, diarization pipeline 100 can identify the existence of multiple speakers in an audio file (e.g., 3 separate speakers in the audio file), and define the start and end time of their respective speech. In some embodiments, analytics 121 includes but is not limited to: the number of speakers in the audio file, confidence for speaker identification, time and percentage of participation to the conversation for each of the speakers, main speaker in the conversation, overlapping speech sections and conventional turns.

In some embodiments, the first component of diarization pipeline 100 is audio preprocessing component 101, which imports media data that includes speech. In some embodiments, the media data is an audio file 106. In some embodiments, audio file 106 is a mono file. In some embodiments, audio file 106 is a stereo file. In the case of a stereo file, converter 107 converts the left (L) and right (R) stereo channels of audio file 106 into two channels: channel 1 and channel 2.

In some embodiments, if the speakers are spatialized and panned over different channels then audio file 106 is converted in a manner that maximizes the spatial information that is present in channels 1 and 2. For example, if it is desired to preserve the spatial information of speaker localization, independent component analysis (ICA) can be used to generate the two channels in which spatial information is preserved and the speakers are separated into the two channels. In some embodiments, principal component analysis (PCA) is used to perform this task. In some embodiments, deep learning or machine learning is used to perform this task. In some embodiments, audio file 106 is a stereo file that is converted to a mono file by submixing the L and R channels, or by selecting one of the two channels (e.g., discarding one of the channels, to improve processing efficiency).

After converting L and R channels into channel 1 and channel 2 to maximize the separation and retention of spatial information for panned speakers, each channel is processed by audio block segmentation component 108, which divides the audio channels 1 and 2 into blocks, which are sent to block-based embeddings extraction component 102. As used herein, a "block" is a processing unit. Each block may contain one or more speech segment(s). A "speech segment" is a time of speech where a unique speaker is talking.

Note that diarization pipeline 100 is able to process audio file 106 of any duration and can also process and perform diarization over multiple files in which the same speakers could be present. For example, in some embodiments diarization pipeline 100 can load (e.g., receive, retrieve) a stereo audio file, apply ICA to the two channels of audio file 106 to maximize and leverage the spatial information associated to panned speech, and generate channel 1 and channel 2. Diarization pipeline 100 then divides the audio file into equal length blocks (e.g., 1-second blocks), where each block is processed by downstream components of pipeline 100. In some embodiments, the blocks include blocks of multiple lengths (e.g., 0.5 seconds, 0.1 seconds, or different durations).

The blocks of each audio channel are processed by block-based embeddings extraction component 102, which performs feature extraction 109 on the blocks and applies voice activity detection (VAD) 113 to the features. In some embodiments, VAD 113 detects the speech of multiple speakers and performs overlapped speech detection 110. The speech detections are used to isolate label speech segments, i.e., portions of the blocks containing speech. The speech detections are based on a combination of results from VAD 113, speaker change detection 112 and overlapped speech detection 110.

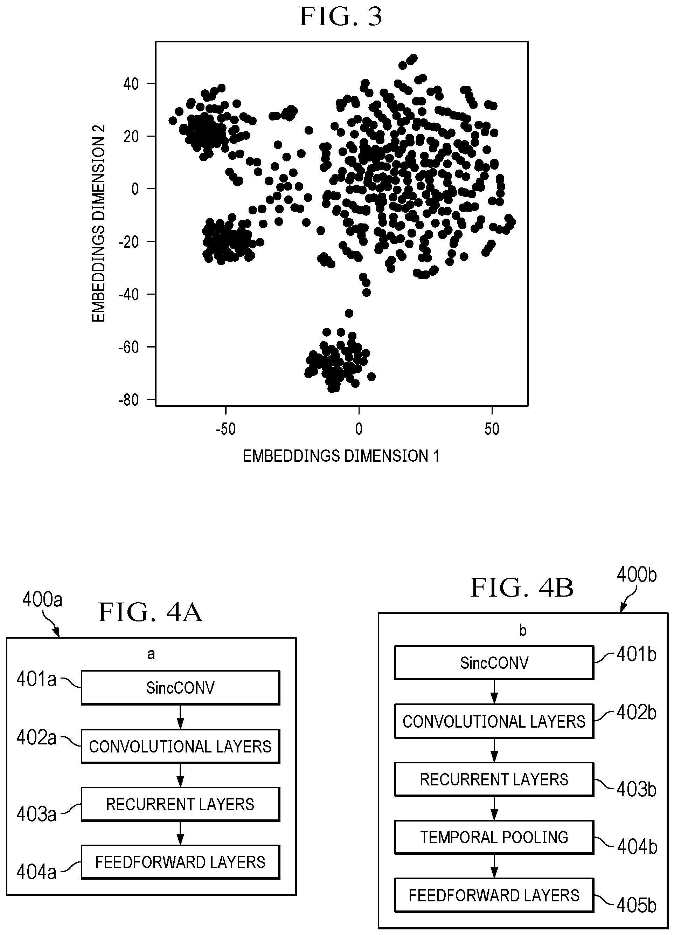

The isolated speech segments are input into embedding extraction component 111 together with data for overlapped speech detection 110 and speaker change detection 112. Embedding extraction component 111 computes embeddings for each segment that is identified by speaker change detection 112 and the overlapped speech is discarded so that no embeddings are extracted from overlapped speech. Embedding extraction component 111 and embedding generation model to extract embeddings (e.g., a multidimensional vectorial representation of a speech segment) from the isolated speech segments. In some embodiments, embedding extraction component 111 performs dimensionality reduction 114 on the embeddings (see FIG. 3) to generate improved embeddings 115 to be clustered by clustering component 104.

Clustering component 104 receives the improved embeddings 115 as input. Short segments identifier 116 identifies short speech segments and long speech segments which are clustered separately using long segment clustering 117 and short segment clustering 118, respectively. The embedding clusters are input into post-processing component 105. Post-processing component 105 performs post-processing 119 and segmentation 120 on the embedding clusters, which are used to generate analytics 121 and visualizations 122.

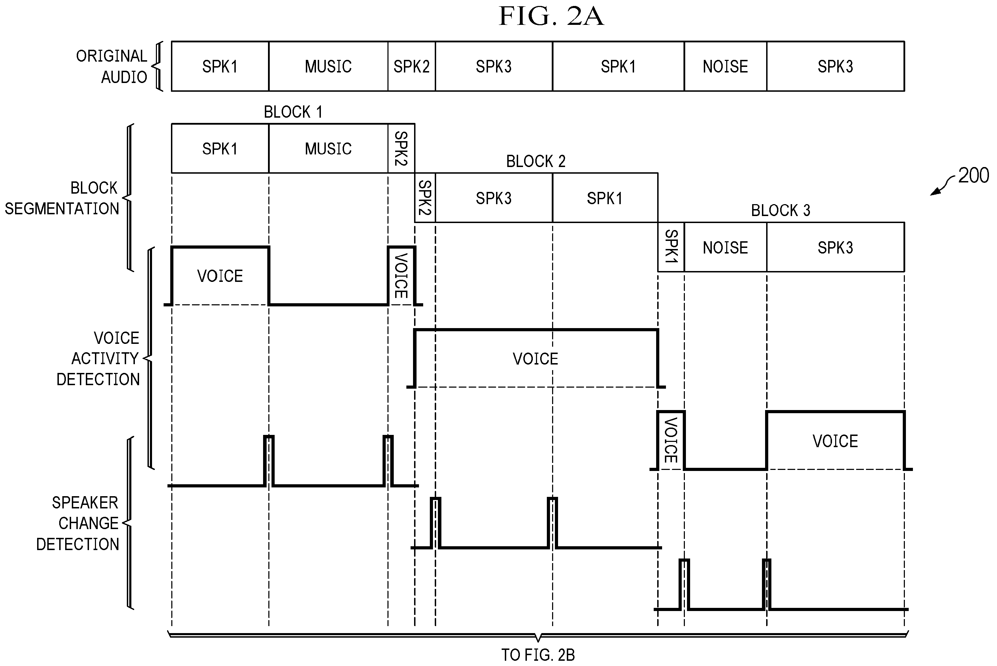

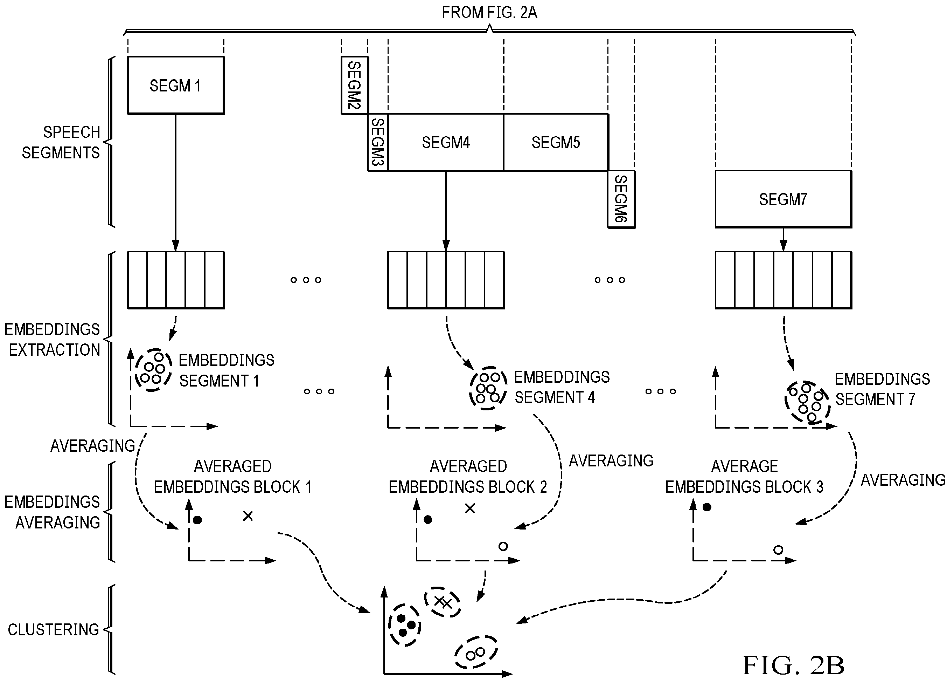

FIG. 2 illustrates in further detail how the different components of diarization pipeline 100 described above work on an audio file 106, according to an embodiment. In speech analytics, embeddings are a multidimensional vectorial representation of a segment of speech. Embeddings are generated to maximize the differentiation of different speakers in a multidimensional feature space. For example, if two speakers talk in a conversation, their generated embeddings will be multidimensional vectors that cluster in two different regions of the multidimensional space. In some embodiments, extracting embeddings includes representing single-speaker speech segments or portions of single-speaker speech segments in a multidimensional subspace. In some embodiments, extracting embeddings includes converting each single-speaker speech segment into a multidimensional vectorial representation.

The rationale behind generating embeddings is to facilitate the clustering of different speakers, thus succeeding in performing speaker diarization. Models, such as, for example, an embedding generation model are used to generate embeddings by mapping or converting speech segments to a representation in multidimensional space. The models can be trained for embeddings generation using different datasets, and by using loss functions that maximize the distance between embeddings of different speakers and minimize the distance of embeddings generated from the same speaker. In some embodiments, the embedding model is a deep neural network (DNN) trained to have a speaker-discriminative embeddings layer.

Referring to FIG. 2, in the example shown the original audio includes speech from three different speakers and ambient sound in the form of music and noise. Audio block segmentation produces a first block (Block 1) that captures speaker 1 (SPK1) speech followed by music, which is followed by speech from speaker 2 (SPK2). Block 1 is input into VAD 113, which detects the beginning and end of the SPK1 speech, resulting in a speech segment 1 (SEGM1). Multiple embeddings of speech segment 1 are generated and features are extracted from each embedding of SEGM1, and the embeddings are statistically combined (e.g., by computing an average embedding from the multiple embeddings). An audio block is a uniform segmentation of the audio file (e.g., 1s, 2s, 3s ... , etc.)

The above process is repeated for Block 2 and Block 3. For example, Block 2 generates a speech segment 4 (SEGM4), which contains speech from SPK3. Block 3 generates speech segment 7 (SEGM7), which contains speech from SPK3. Average embeddings of features are extracted from SEGM4 and SEGM7. The average embeddings for Blocks 1, 2 and 3 are then input into clustering processes (e.g., short and long segment clustering). Each cluster represents the speech from one of the 3 speakers, e.g., 3 clusters in three different regions of the multidimensional feature space.

FIG. 3 is an embeddings representation of a segment of audio containing 4 speakers, after dimensionality reduction to two dimensions using t-Distributed stochastic neighbor embedding (t-SNE), according to an embodiment. The 512-D embeddings have been reduced to 2D for visualization purposes using, for example, the t-SNE algorithm described in Van der Maaten, Laurens, and Geoffrey Hinton. "Visualizing data using t-SNE." Journal of machine learning research 9.11 (2008). Each dot in FIG. 3 represents an embedding of a segment of speech. Embeddings belonging to the same speaker tend to cluster in space, and 4 distinct clusters can be identified in FIG. 3, each cluster representing a different one of the 4 speakers.

Referring again to FIG. 1, pipeline 100 includes three speech detections that are performed before the embeddings extraction: 1) VAD 113; 2) overlapped speech detection 110; and 3) speaker change detection 112. VAD 113 isolates speech segments from music or noise or other audio sources. In some embodiments, speech activity detection is performed using VAD described in the AC-4 standards. In some embodiments, VAD 113 is based on the architecture described in FIGS. 4A, 4B below. Overlapped speech detection 110 identifies regions where overlapping speech is present. Overlapping speech is normally discarded from the diarization task. Process 400a may be used to detect overlapped speech. Other architectures may also be used for overlapped speech detection, including different CNN and/or RNN architectures. Speaker change detection 112 detects a conversation turn. A conversation turn is a transition from a first speaker to a second, different speaker. Speaker change detection 112 is performed on the output of VAD 113. Process 400a may also be used for speaker change detection. Other architectures may also be used for speaker change detection, such as different CNN and/or RNN architectures.

FIG. 4A is a flow diagram of process 400a in pipeline 100, which provides speaker change detection 112 and overlapped speech detection 110, using cross-entropy loss and binary classification models, according to some embodiments. In some embodiments, process 400a includes a convolutional neural network (CNN) architecture 401a, followed by one or more convolutional layers 402a, followed by one or more recurrent neural network (RNN) layers 403a, followed by one or more feedforward neural network (FNN) layers 404a. In some embodiments, the layers are trained against a binary classification problem (e.g., the presence or absence of speech) using suitable training techniques, such as back propagation.

FIG. 4B is a flow diagram of process 400b in diarization pipeline 100, which can solve the embeddings extraction process using triplet loss. In some embodiments, process 400b includes a convolutional neural network (CNN) layer 401b, followed by one or more convolutional layers 402b, followed by one or more recurrent layers 403b, followed by temporal pooling 404b, followed by one or more feedforward layers 404a. The output of process 400b are speech segments.

In processes 400a and 400b, CNN 401a, CNN 401b can be implemented using, for example, the SincCONV architecture described in Ravanelli, M., & Bengio, Y. (2019). Speaker Recognition from Raw Waveform with SincNet. 2018 IEEE Spoken Language Technology Workshop, SLT 2018 - Proceedings, 1021-1028. https://doi.org/10.1109/SLT.2018.8639585. In some embodiments, the SincCONV architecture can be replaced with handcrafted features (e.g., Mel-frequency cepstral coefficients (MFCC)).

After segmenting the speech into segments where only one speaker is present (e.g., each segment does not include speech from more than one speaker as shown in FIG. 2), and isolating segments of different speakers, embeddings from speech are extracted by block-based embeddings extraction component 102. In some embodiments, x-vectors, d-vectors, i-vector or other strategies could be used for the extraction of embeddings from speech. The architecture in FIG. 4B could be used for the same purpose, after training the model on speech data to maximize the separability between different speakers. Different cost functions could be used to minimize the loss during training, such as triplet loss, cross-entropy loss, probabilistic linear discriminant analysis (PLDA) based loss, and others.

In some embodiments, embeddings are extracted over a specified window length, as shown in FIG. 2. In some embodiments, embeddings are extracted over a constant time window length (e.g., 20 ms). After the extractions, the embeddings belonging to a contiguous segment of speech from the same speaker are averaged to reduce noise and improve accuracy, as shown in FIG. 2. The number of embeddings that are averaged and the threshold that defines the maximum time window for averaging can be modified according to the length of the input audio file 106. For long input audio files, averaging all the embeddings that are part of an entire speech segment from the same speaker is acceptable. By contrast, in the case of short input audio files, the maximum accepted time window for embeddings' averaging can be reduced, to generate an overall larger number of embeddings that will be fed to the clustering component 104 to improve clustering accuracy.

Different embeddings models can be trained for different content types using different training datasets (e.g., training data corresponding to a respective content or media type). In some embodiments, an embedding model is optimized to extract (infer) embeddings from content associated with an environment (e.g., sporting venue, concert venue, vehicle cabin, recording studio), use-case (e.g., podcast, lecture, interview, sportscast, music), a subject or topic (e.g., chemistry), an activity (e.g., commuting, walking), etc. In some embodiments, an embedding model is optimized for user generated content (e.g., amateur recordings, mobile device recordings, etc.). In some embodiments, the type of content that needs to be diarized (e.g., podcast, telephone call, educational, user generated content, etc.) is specified by an application or user of an application, and diarization pipeline 100 selects the best model for the type of content that needs to be processed in accordance the specified type of content. In some embodiments, the best model is selected according to various methodologies (e.g., a lookup table, a content analysis).

After the extraction of the embeddings 111, the embeddings' are further processed as shown in FIG. 1. In an embodiment, embeddings' processing is performed by two components: 1) embeddings dimensionality reduction component 114, and 2) embeddings optimization component 115. In some embodiments, one or both of components 114, 115 are skipped, e.g., in response to determining that the extracted embeddings are above a quality threshold.

The dimensionality reduction component 114 is implemented to improve the ability to differentiate between different speakers and to maximize the success of the clustering. The embeddings dimensionality could be reduced using PCA, t-SNE, uniform manifold approximation and projection (UMAP), PLDA or other dimensionality reduction strategies.

The embeddings optimization component 115 is described in more details in the following sections. The intent is to use a data driven approach to train a model for maximizing the separability between embeddings and further facilitate the clustering process. In some embodiments, this could be achieved using a multi-head attention plus generalized end-to-end (GE2E) loss architecture for embeddings optimization. Other architectures could also be used for this purpose.

After embeddings extraction and processing, embeddings are clustered into different speakers. The clustering component 105 performs clustering by differentiating between short speech segments 117 and long speech segments 118, as shown in FIG. 1, and as described in further detail below. Different clustering strategies can be used for short or long segment clustering. In some embodiments, an improved spectral clustering is described in, for example, Wang, Q., Downey, C., Wan, L., Mansfield, P. A., & Moreno, I. L. (2018).c Speaker diarization with LSTM. ICASSP, IEEE International Conference on Acoustics, Speech and Signal Processing - Proceedings, 2018-April, 5239-5243.

Other clustering strategies can also be used, such as hierarchical clustering, affinity propagation, agglomerative clustering or VBx clustering. In some embodiments, the number of speakers in the audio file 106 is known or determined. For example, data can be obtained that is indicative of the number of speakers associated with the audio file is received (e.g., via an application programming interface (API) call) or derived based on analysis of the audio file using, for example, k-means clustering or other suitable clustering algorithm. In an embodiment, an elbow method can be used with the k-means clustering algorithm when the number of speakers is not known beforehand. The elbow method can include plotting a curve of an explained variation as a function of a number of clusters, and then picking the elbow of the curve as the number of clusters to use.

After clustering, post-processing 119 of the clustered embeddings is performed. Post-processing 119 is performed to remove misdetections and improve clustering accuracy. In some embodiments, a method such as a Hidden Markov Model (HMM) with predefined transitional probability between different speakers is used for this purpose. The resulting improved and postprocessed embeddings are used by segmentation component 120 to segment the audio file into segments with associated speaker label/identifiers.

Analytics 121 are generated from the clustered embeddings as output of diarization pipeline 100. Analytics 121 can include information including but not limited to: number of speakers, confidence of speaker detection, percentage and time of speaker participation in the conversation, most relevant speaker, and other analytics are generated. Diarization pipeline 100 can also generate an overview of detection accuracy in the speaker diarization task.

*Example Preprocessing Block*

As previously described, audio preprocessing component 101 allows diarization pipeline 100 to generate diarization output for stereo and mono input files. In case of mono files, the audio files are treated as mono files and processed by audio block segmentation block 108, as described below. In the case of stereo files, processes 500a, 500b can be applied.

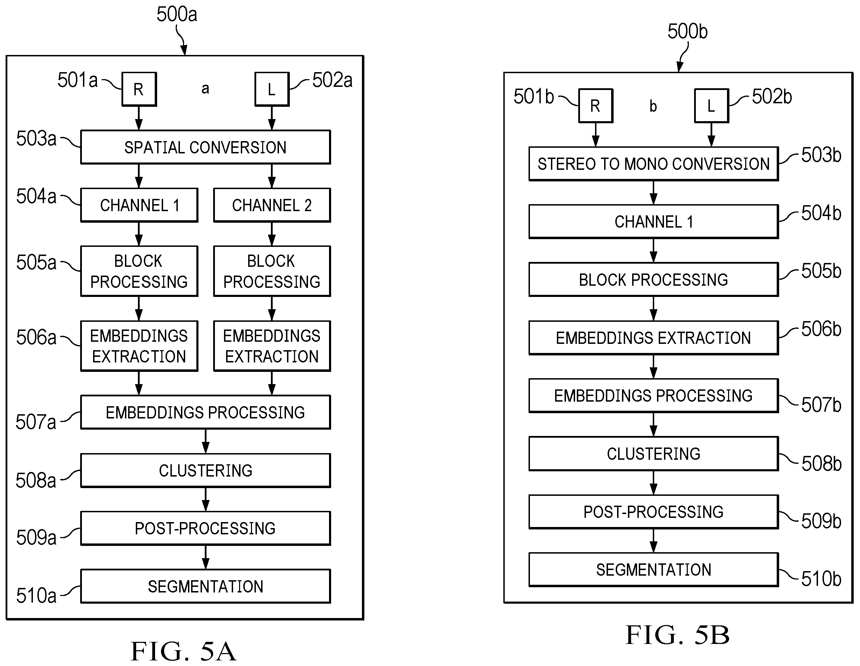

FIG. 5A is a flow diagram for processing stereo files in diarization pipeline 100, according to an embodiment. Process 500a (shown in FIG. 5A) illustrates an embodiment utilized when left channel 501a and right channel 502a are different, and speakers' voices are panned and not symmetric between right and left channels. Panned speech has spatial information that could be useful for the diarization task. For each channel 501a, 502a, spatial conversion block 503a separates the spatial information into two different channels 504a (channel 1, channel 2) to improve the success of the diarization task. In some embodiments, ICA or PCA are implemented by spatial conversion block 503a. Deep learning strategies could also be used. The remaining blocks of diarization pipeline 100 are applied separately to channel 1 and channel 2. After block processing 505a and embeddings' extraction stage 506a, embeddings are processed jointly 507a (e.g., embeddings from each channel are combined for subsequent processing), to generate a processed version of the embeddings that leverage the information associated to the spatial localization of the speakers. In some embodiments, process 500a is applied to multichannel audio (e.g., Dolby® Atmos®) instead of binaural audio.

FIG. 5B is a flow diagram for an alternative processing of stereo files in diarization pipeline 100, according to an embodiment. In some embodiments, when left and right channels 501a, 501b are identical (FIG. 4B), stereo files are converted to mono 503b and the remaining blocks of diarization pipeline 100 are applied to a single mono file as described in reference to FIG. 5A. The mono conversion is achieved by selecting one of the two channels or by downmixing.

*Example Audio Block Segmentation*

Audio block segmentation 108 is another step in pipeline 100 (see FIGS. 1, 2 and 6). The embeddings extracted by each speech segment (segment is a time window of speech where a unique speaker is talking), are stored and clustered after all the embeddings have been extracted from each segment over multiple audio blocks. This process introduces the possibility to process files of any length, and limits the processing and memory usage that would be required to process a file in its entirety, without affecting the performance. This process can be applied to a list of input files, thus enabling the possibility to perform diarization over episodical content.

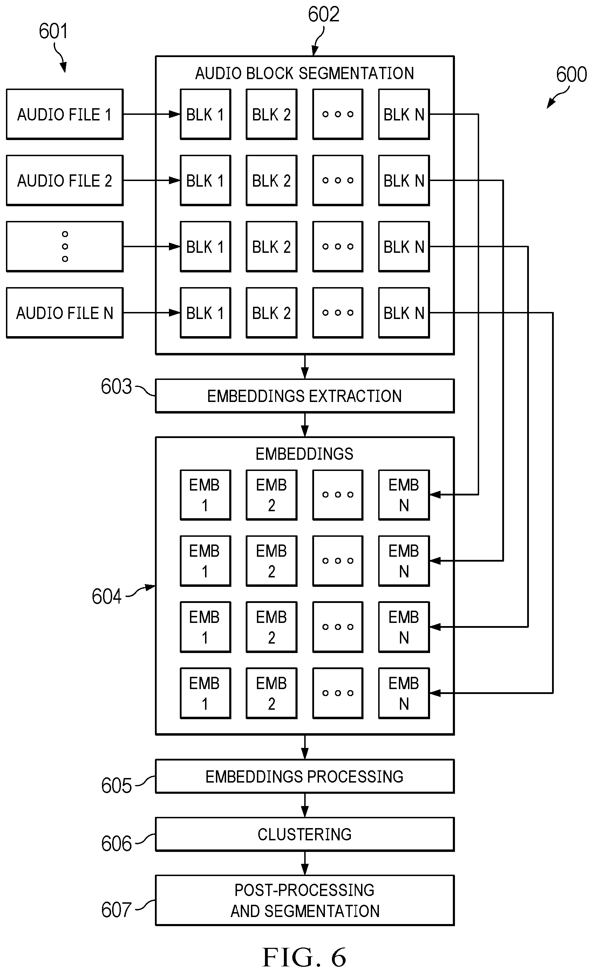

Referring to FIG. 6, a collection of input audio files 601 from episodical content (e.g., a podcast season) are segmented by audio block segmentation 602 and fed through embedding's extraction component 603, as previously described in reference to FIG. 1. Extracted embeddings 604 are then combined together in embeddings processing 605, clustered 606 and input into postprocessed/segmentation 607. These steps allow speaker diarization to be performed over multiple audio files 106, thus enabling the possibility to compute analytics over episodical content.

*Example Embeddings*

Embeddings play an important role in a speaker diarization system since the embeddings are a multidimensional vectorial representation of a segment of speech. Existing solutions utilized Gaussian Mixture Modeling (GMM) based embedding extractions, i-vectors, x-vectors, d-vectors, etc. While those existing methods may be robust and show good performance on solving speaker diarization problems, they are not fully utilizing temporal information. Therefore, a new module is introduced in diarization pipeline 100 to further improve the effectiveness of embeddings by utilizing temporal information, thereby increasing the accuracy of clustering in the next step.

Several related ideas have been proposed in the literature that utilize the temporal information of speech to generate improved embeddings. For example, a long short-term memory (LSTM) based vector to sequence scoring model has been proposed, which utilizes an adjacent temporal information to generate similarity scores from embeddings. There are, however, two limitations of the LSTM structure: 1) The LSTM structure focuses more on local information and may fail in long-term dependent tasks, and 2) the LSTM structure is both time consuming and space consuming.

To address the limitations of the LSTM structure, architectures entirely based on an attention mechanism have shown promising value in sequence-to-sequence learning. Besides providing significantly faster training, attention networks demonstrate efficient modeling of long-term dependencies. For example, a positional multi-head attention model structure and triplet loss function can be used. The positional encoding is a multidimensional vector that contains information about a specific position in speech. Additionally, triplet ranking loss is utilized to learn a similarity metric using the output from multi-head attention model.

In some embodiments, a new loss function called 'End-to-End loss function' can be used to solve the speaker verification problem. GE2E training is based on processing a large number of utterances at once, in the form of a batch that contains N speakers, and M utterances from each speaker in average. The similarity matrix $S_{ji,k}$ is defined as the scaled cosine similarities between each embedding vector $e_{ji}$ to all centroids $c_k$.

$$S_{ji,k} = w \cdot \cos(e_{ji}, c_k) + b$$

[1]

Here $e_{ji}$ represents the embedding vector of the $j^{th}$ speaker's $i^{th}$ utterance (1<=i<=M, j<=N), $c_k$ represents the centroid of the embedding vectors where k <= N.

Since the speaker diarization problem is also trying to find a similarity matrix using the extracted embedding, and then perform clustering algorithm based on the similarity matrix, the constraint on M utterance in Equation [1] can be removed and a similar equation can be used to compute loss, because the speaker can talk unlimited number of times in speaker diarization problem. Similar as Equation [1], $e_{ji}$ represents the embedding vector of the $j^{th}$ speaker's $i^{th}$ utterance (i>=1, j<=N), $c_k$ represents the centroid of the embedding vectors where k <=N. Then if a softmax function is used on Equation [1], the loss on each embedding vector $e_{ji}$ could be defined as:

$$\mathcal{L}(e_{ji}) = -S_{ji,k} + log \sum_{k=1}^{N} \exp (S_{ji,k}) \ .$$

[2]

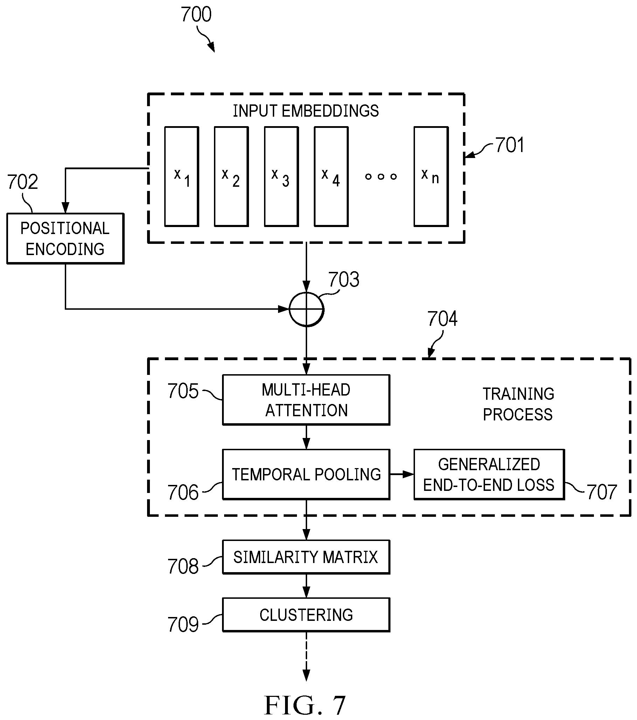

FIG. 7 illustrates multi-head attention plus GE2E loss function, according to an embodiment. As shown in FIG. 7, the overall embedding optimization module 700 sends input embeddings 701 into a multi-head attention model. Positional encoding 702 is applied for each time step, which means the training process uses temporal pooling 706 to take temporal information into consideration in the training process. The training process minimizes the loss function 707 (e.g., GE2E loss function shown in Equation [2]). The loss function 707 pushes each embedding vector close to its centroid and pulls it away from all other centroids. During testing, the weights and bias trained within the multi-head attention model are utilized to predict optimized embeddings for each input and form a similarity matrix 708, which input into clustering 709. Since it considers the temporal information, it should be able to struct a better similarity matrix compares to the original embedding.

*Example Clustering Techniques*

Spectral clustering is a standard clustering algorithm that has been used in multiple tasks, including diarization. In diarization pipeline 100, a modified version of spectral clustering is used. FIG. 1 illustrates an embodiment combining a modified version of spectral clustering with diarization pipeline 100 described in reference to FIG. 1. Modified spectral clustering is one example clustering strategy that is supported by diarization pipeline 100. In some embodiments, other clustering strategies can be used, including but not limited to: hierarchical clustering, k-means, affinity propagation, or agglomerative clustering can be used.

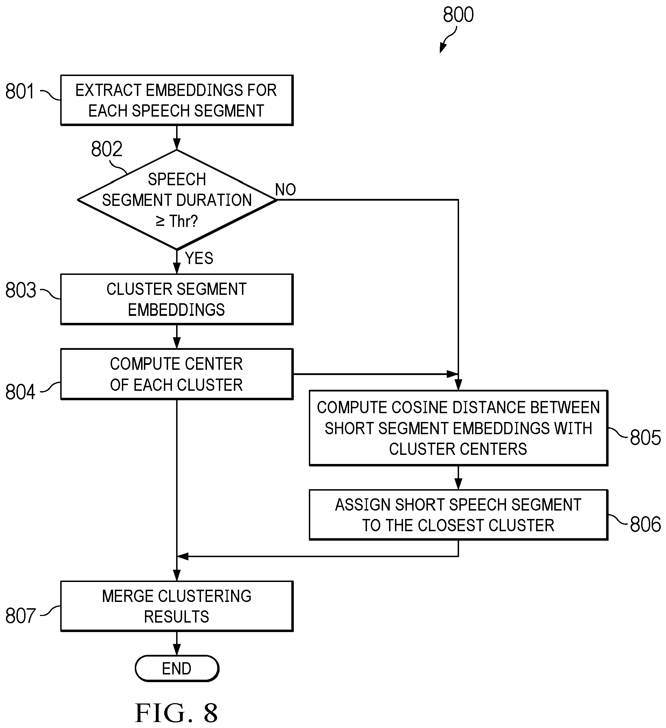

As previously described, to remove noise and improve embeddings' estimation accuracy, in some embodiments the embeddings generated over a speech segment where a single speaker is present are averaged. For this reason, a short duration speech segment may not be informative enough for the characterization of a speaker. This might be due to embeddings inaccuracies that would be averaged out in a long duration speech segment. Hence, a double step clustering approach is proposed as described in reference to FIG. 8.

In some embodiments, Bayesian HMM clustering of x-vector sequences(VBx) can be used in diarization pipeline 100, which is described in Landini, Federico, Ján Profant, Mireia Diez, and Lukáš Burget. "Bayesian HMM clustering of x-vector sequences (VBx) in speaker diarization: theory, implementation and analysis on standard tasks." Computer Speech & Language71 (2022): 101254. In diarization pipeline 100, VBx is modified to take an x-vector and other embeddings.

FIG. 8 is a flow diagram of a double clustering process, according to an embodiment. As shown in FIG. 8, embeddings are extracted for each speech segment 801. The speech segments are separated into long-duration speech segments 802 and short-duration speech segments 803 based on a duration threshold. Long-duration speech segments 802 are clustered first 803, and the center of each cluster is calculated 804. The cosine distance (e.g., Eisen cosine correlation distance) between each of the short-duration speech segment and each cluster is computed 805, and the short-duration speech segments 803 are assigned to the closest cluster. Other metrics of distance could be used (e.g., Euclidean, Manhattan, Pearson, Spearman, Kendall correlation distances), or other strategies can be employed to assign each short speech segments 803 to the optimal cluster. The overall clustering result is a combination of the clustering results of short-duration speech segments 803 and long-duration speech segments 802.

*Example Postprocessing*

Another component in processing pipeline 100 is postprocessing component 105. Postprocessing component 105 is introduced in pipeline 100 to reduce errors in segmentation and clustering. Postprocessing 105 analyzes annotations generated by the clustering, and identifies and corrects possible errors. Several postprocessing strategies can be used in pipeline 100. For example, an HMM with an associated probability of speaker change could be used. Other algorithms that leverage the temporal relationship between annotations can be used for the same purpose.

*Example Speaker Identification*

Speaker identification (speakerID) is the ability to understand the speaker identity based on an input voiceprint. In some embodiments, diarization pipeline 100 uses an input voiceprint (e.g., 10-20 seconds of a person talking) to determine if an audio file contains speech from that person. Additionally, based on the knowledge of voiceprints of multiple speakers, speakerID labels can be assigned to the output of diarization pipeline 100. As described above, diarization pipeline 100 computes embeddings for each speech segment, and subsequently clusters embeddings into a limited number of clusters.

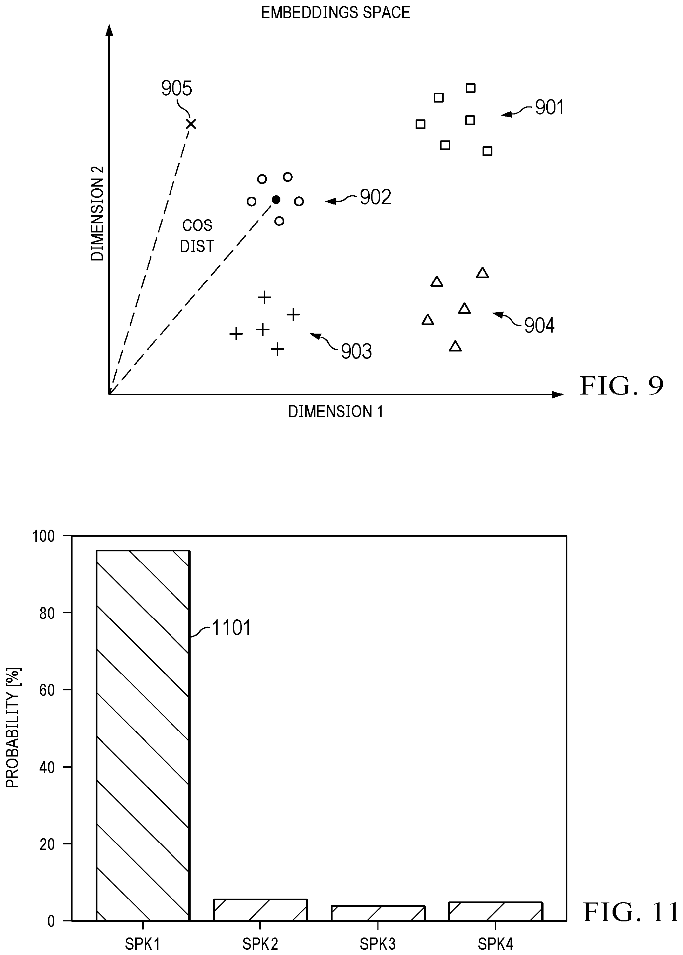

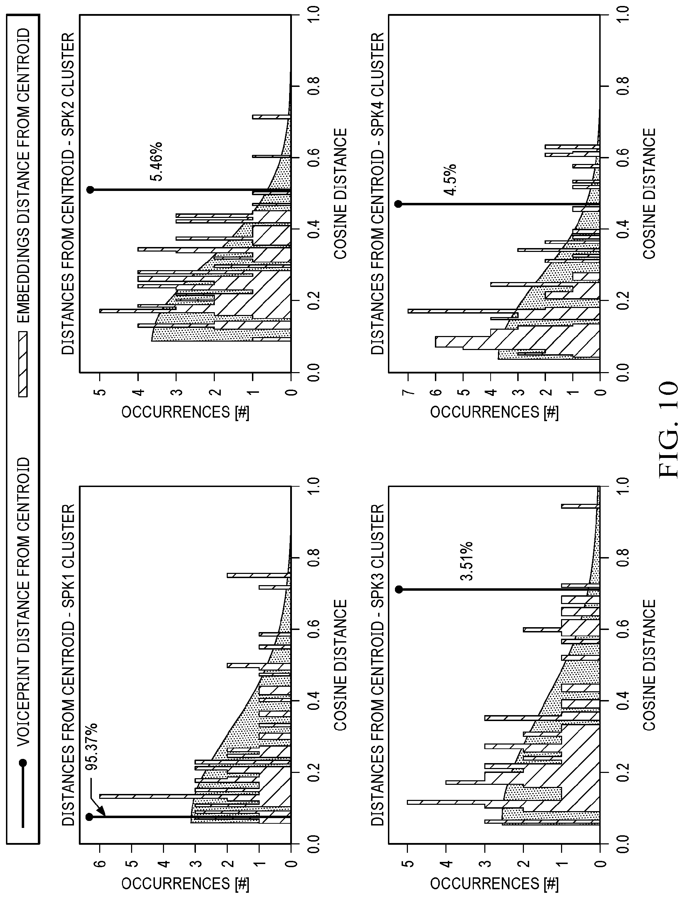

FIGS. 9 and 10 illustrate how the distances of reference points from the embeddings belonging to the cluster are approximated as folded-gaussian distributions, according to an embodiment. Reference points can be centroids or any other suitable reference point, such medoids in partition around medoids (PAM) clustering. As shown in FIG. 9, the first step of the speakerID process is computing a voiceprint distance metric, which in this example is a cosine distance metric, $d\_vp_i$, between the voiceprint $vp$ (905) and each reference point of each cluster (e.g., centroids $c_i$ (for clusters 901-904)), where $i$ is an index identifying the clusters, going from 1 to N, where N is the number of clusters. In the example shown, N=4 clusters representing four main speakers.

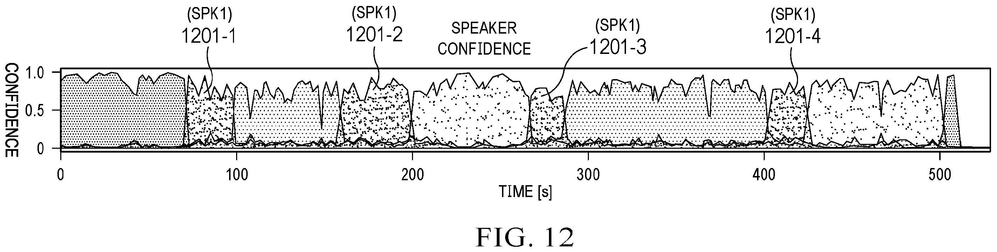

For each cluster, the cosine distance from the reference point of the cluster to each embedding belonging to that cluster is computed. For each cluster 901-904, the distribution of the distances of the embeddings from the reference point belonging to that cluster are also computed. In some embodiments, the distributions are modeled as folded Gaussian distributions ($p_i$), as shown in FIG. 10. Subsequently, the probability that the voiceprint distances belong to the corresponding distribution are computed. The probabilities can be ranked and assigned the voiceprint to the corresponding cluster, as illustrated in FIG. 11, where Spk1 in this example has the highest probability. By defining a confidence threshold, the probability that the voiceprint's person spoke at all in the audio file can be better understood. Understanding when the speaker associated to a voiceprint spoke can be determined by joining the speakerID result with the output of diarization pipeline 100, as illustrated in FIG. 12. In the example shown in FIG. 12, the speakerID result is used to identify speech segments 1201-1 through 1201-4, where Spk1 is speaking.

*Example Analytics/Visualizations*

Diarization pipeline 100 generates analytics, metrics and visualizations as output. The output provides a user with an objective and clear quantification of the output of diarization pipeline 100. In some embodiments, analytics and visualizations are generated for a single file, for multiple episodical files, and/or for entire datasets. Table 1 and Table 2 below summarize example analytics that can be generated by diarization pipeline 100. In some embodiments, a visualization includes causing the display of a first object representing a first speaker, a second object representing a respective speaker, and a connector object connecting the first and second object that varies in appearance (length, size, color, shape, style, etc.) according to one or more statistics derived from the clustered embeddings.

Table 1 - Example Single File Analytics Summary

| Name | Purpose |
| --- | --- |
| Number of talkers | Get total number of talkers in the conversation |
| Confidence of each talker detection | Understand how confident we about each detected talker in the conversation are |

(continued)

| Name | Purpose |
|---|---|
| Percentage of each talker participation in the conversation | Understand who is the dominant talker / How much time does each talker talks in the conversation |
| Speech segments for each talker | Know start and end time of each speech segment for each talker |
| Most relevant talker | Understand who is the main speaker in a conversation, host of a podcast, main presenter, etc. |
| Longest monologue for each talker | Understand the longest monologue for each talker |
| Conversation changes | Identify when there is a change of speaker in conversation |
| Speaker overlaps | Identify when two speakers speak at the same time |
| Politeness Level | Quantify how polite a speaker is, based on number of interruptions of other speakers |
| Number of silences | Quantifies silences in the conversation. |

Table 2 - Example Episodical Analytics Summary

| Name | Purpose |
|---|---|
| Number of talkers | Get total number of talkers in the episodical content |
| Conversation time for each talker | How much time does each talker talks in the conversation, over multiple episodes. |
| Interaction between talkers | Define interaction of talkers in the episodes of the season using interaction graph (Figure 8). |
| Main talker per episode | Define the main talker for each episode |
| Expansion of single file analytics to full season | All the analytics described for single file, could be used to describe seasonal content as well. |
| ... | |

Additionally, the performance diarization pipeline 100 can be evaluated. With a diarization ground truth, the evaluation metrics in Table 3 can be used to generate a report that allows the user to better evaluate the performance of diarization pipeline 100.

Table 3 - Example Evaluation Metrics Summary

| Module | Evaluation metrics |
|---|---|
| Speech activity detection | Detection cost function |
| | Detection error rate |
| | Detection accuracy |
| | Detection precision |
| | Detection recall |
| Segmentation | Segmentation purity |
| | Segmentation coverage |

(continued)

| Module | Evaluation metrics |
|---|---|
| Diarization | Diarization error rate |
| | Jaccard error rate |
| | Diarization purity |
| | Diarization coverage |
| | Diarization completeness |
| | Diarization homogeneity |
| Speaker focused evaluation | Number of speakers |
| | Speaker duration |
| | Precision for each speaker |
| | Recall for each speaker |
| | Accuracy for each speaker |

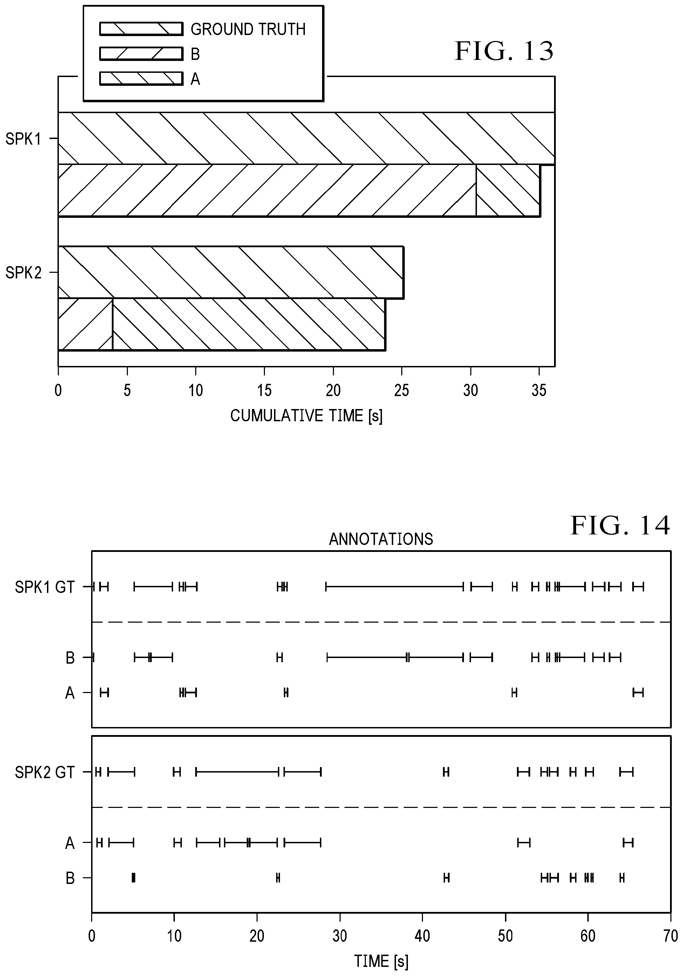

In some embodiments, diarization pipeline 100 includes a visualization module in to help users understand the diarization performance in a more efficient way. For example, FIG. 13 shows the percentage of time that each speaker talks, which is helpful for understanding the relative duration of each speaker and how much of the speech has been correctly detected. FIG. 14 shows the speech segment of each speaker, with ground truth shown as a baseline, which is helpful for understanding the performance of diarization pipeline 100 more intuitively.

*Example Process*

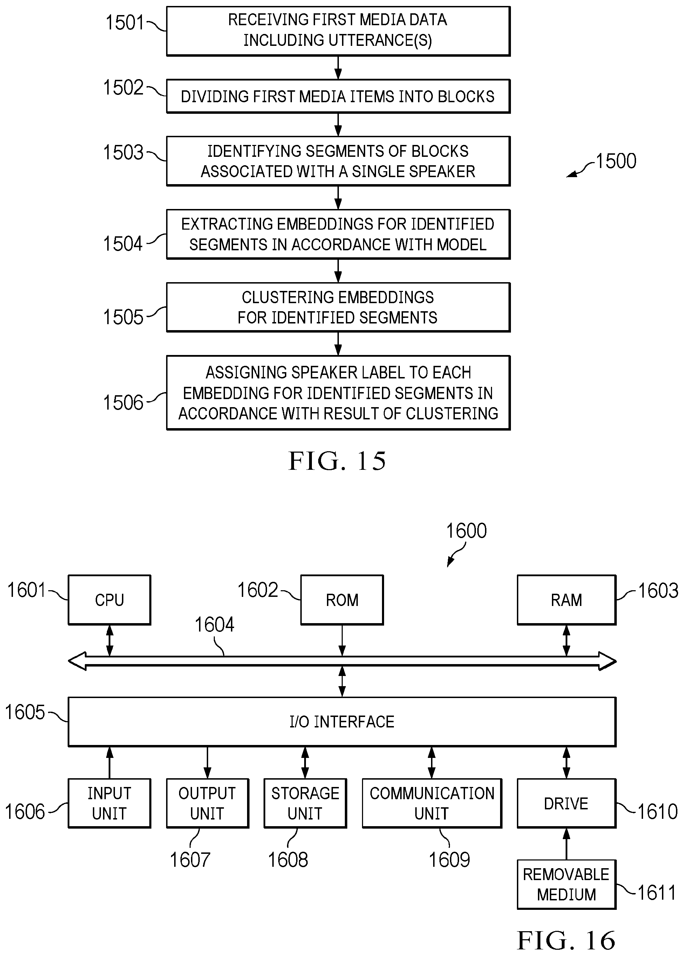

FIG. 15 is a flow diagram of process 1500 of context aware audio processing, according to an embodiment. Process 1500 can be implemented using, for example, device architecture 1500 described in reference to FIG. 16.

Process 1500 includes the steps of receiving media data including one or more utterances (1501), dividing the media data into a plurality of blocks (1502), identifying segments of each block of the plurality of blocks associated with a single speaker (1503), extracting embeddings for the identified segments in accordance with a machine learning model (1504), clustering the embeddings for the identified segments into clusters (1505), and assigning a speaker label to each of the embeddings for the identified segments in accordance with a result of the clustering (1506). Each of these steps were previously described in detail above in reference to FIG. 1-14.

*Example System Architecture*

FIG. 16 shows a block diagram of an example system 1600 suitable for implementing example embodiments described in reference to FIGS. 1-15. System 1600 includes central processing unit (CPU) 1601 which is capable of performing various processes in accordance with a program stored in, for example, read only memory (ROM) 1602 or a program loaded from, for example, storage unit 1608 to random access memory (RAM) 1603. In the RAM 1603, the data required when CPU 1601 performs the various processes is also stored, as required. CPU 1601, ROM 1602 and RAM 1603 are connected to one another via bus 1604. Input/output (I/O) interface 1605 is also connected to bus 1604.

The following components are connected to I/O interface 1605: input unit 1606, that may include a keyboard, a mouse, or the like; output unit 1607 that may include a display such as a liquid crystal display (LCD) and one or more speakers; storage unit 1608 including a hard disk, or another suitable storage device; and communication unit 1609 including a network interface card such as a network card (e.g., wired or wireless).

In some embodiments, input unit 1606 includes one or more microphones in different positions (depending on the host device) enabling capture of audio signals in various formats (e.g., mono, stereo, spatial, immersive, and other suitable formats).

In some embodiments, output unit 1607 include systems with various number of speakers. Output unit 1607 can render audio signals in various formats (e.g., mono, stereo, immersive, binaural, and other suitable formats).

Communication unit 1609 is configured to communicate with other devices (e.g., via a network). Drive 1610 is also connected to I/O interface 1605, as required. Removable medium 1611, such as a magnetic disk, an optical disk, a magneto-optical disk, a flash drive or another suitable removable medium is mounted on drive 1610, so that a computer program read therefrom is installed into storage unit 1608, as required. A person skilled in the art would understand that although system 1600 is described as including the above-described components, in real applications, it is possible to add, remove, and/or replace some of these components and all these modifications or alteration all fall within the scope of the present disclosure.

In accordance with example embodiments of the present disclosure, the processes described above may be implemented as computer software programs or on a computer-readable storage medium. For example, embodiments of the present disclosure include a computer program product including a computer program tangibly embodied on a machine readable medium, the computer program including program code for performing methods. In such embodiments, the computer program may be downloaded and mounted from the network via the communication unit 709, and/or installed from removable medium 1611, as shown in FIG. 16.

Generally, various example embodiments of the present disclosure may be implemented in hardware or special purpose circuits (e.g., control circuitry), software, logic or any combination thereof. For example, the units discussed above can be executed by control circuitry (e.g., a CPU in combination with other components of FIG. 16), thus, the control circuitry may be performing the actions described in this disclosure. Some aspects may be implemented in hardware, while other aspects may be implemented in firmware or software which may be executed by a controller, microprocessor or other computing device (e.g., control circuitry). While various aspects of the example embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

Additionally, various blocks shown in the flowcharts may be viewed as method steps, and/or as operations that result from operation of computer program code, and/or as a plurality of coupled logic circuit elements constructed to carry out the associated function(s). For example, embodiments of the present disclosure include a computer program product including a computer program tangibly embodied on a machine readable medium, the computer program containing program codes configured to carry out the methods as described above.

In the context of the disclosure, a machine readable medium may be any tangible medium that may contain, or store a program for use by or in connection with an instruction execution system, apparatus, or device. The machine readable medium may be a machine readable signal medium or a machine readable storage medium. A machine readable medium may be non-transitory and may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Computer program code for carrying out methods of the present disclosure may be written in any combination of one or more programming languages. These computer program codes may be provided to a processor of a general purpose computer, special purpose computer, or other programmable data processing apparatus that has control circuitry, such that the program codes, when executed by the processor of the computer or other programmable data processing apparatus, cause the functions/operations specified in the flowcharts and/or block diagrams to be implemented. The program code may execute entirely on a computer, partly on the computer, as a stand-alone software package, partly on the computer and partly on a remote computer or entirely on the remote computer or server or distributed over one or more remote computers and/or servers.

**Claims**

1. A method comprising:

> receiving, with at least one processor, media data including one or more utterances;
> dividing, with the at least one processor, the media data into a plurality of blocks;
> identifying, with the at least one processor, segments of each block of the plurality of blocks associated with a single speaker;
> extracting, with the at least one processor, embeddings for the identified segments in accordance with a machine learning model, wherein extracting embeddings for identified segments further comprises statistically combining extracted embeddings for identified segments that correspond to a respective continuous utterance associated with a single speaker;
> clustering, with the at least one processor, the embeddings for the identified segments into clusters;
> assigning, with the at least one processor, a speaker label to at least one of the embeddings for the identified segments in accordance with a result of the clustering; and

outputting, with the at least one processor, speaker diarization information associated with the media data based in part on the speaker labels,

the method further comprising:

before dividing the media data into a plurality of blocks, performing, with the at least one processor, a spatial conversion on the media data,

wherein performing the spatial conversion on the media data comprises:

converting a first plurality of channels of the media data into a second plurality of channels different than the first plurality of channels; and

dividing the media data into a plurality blocks includes independently dividing each of the second plurality of channels into blocks.

2. The method of claim 1, further comprising:

in accordance with a determination that the media data corresponds to a first media type, the machine learning model is generated from a first set of training data; and

in accordance with a determination the first media data corresponds to a second media type different than the first media type, the machine learning model is generated from a second set of training data different than the first set of training data.

3. The method of any one of claims 1-2, further comprising:

prior to clustering, and in accordance with determining that an optimization criteria is met, further optimizing the extracted embeddings for the identified segments,

the method optionally further comprising:

prior to clustering, and in accordance with determination that an optimization criteria is not met, foregoing further optimizing the extracted embeddings for the identified segments.

4. The method of claim 3, wherein optimizing the extracted embeddings for identified segments includes performing at least one of dimensionality reduction of the extracted embeddings or embedding optimization of the extracted embeddings,

wherein embedding optimization optionally includes:

training the machine learning model for maximizing separability between the extracted embeddings for identified segments; and

updating the extracted embeddings by applying the machine learning model for maximizing the separability between the extracted embeddings for identified segments to the extracted embeddings identified segments.

5. The method of any one of claims 1-4, wherein the clustering comprises:

for each identified segment:

determining a respective length of the segment;

in accordance with a determination that the respective length of the segment is greater than a threshold length, assigning the embeddings associated with the respective identified segment according to a first clustering process; and

in accordance with a determination that the respective length of the segment is not greater than a threshold length, assigning the embeddings associated with the respective identified segment according to a second clustering process different from the first clustering process.

6. The method of any one of claims 1-5, further comprising:

selecting a first clustering process from a plurality of clustering processes based in part on a determination of a quantity of distinct speakers associated with the media data.

7. The method of any one of claims 1-6, wherein the first clustering process includes spectral clustering.

8. The method of any one of claims 1-6, wherein the media data includes a plurality of related files, the method optionally further comprising:

selecting a plurality of the related files as the media data, wherein selecting the plurality of related files is based in part on at least one of:

a content similarity associated with the plurality of related files;

a metadata similarity associated with the plurality of related files; or

received data corresponding to a request to process a specific set of files.

9. The method of claim 8, wherein the machine learning model is selected from a plurality of machine learning models in accordance with one or more properties shared by each of the plurality of related audio files.

10. The method of claim 1, further comprising:

computing a voiceprint distance metric between a voiceprint embedding and a reference point of each cluster;

computing a distance from each reference point to each embedding belonging to that cluster;

computing, for each cluster, a probability distribution of the distances of the embeddings from the reference point for that cluster;

for each probability distribution, computing a probability that the voiceprint distance belongs to the probability distribution;.

ranking the probabilities;

assigning the voiceprint to one of the clusters based on the ranking; and

combining a speaker identity associated with the voiceprint with the speaker diarization information.

11. The method of claim 10, wherein the probability distributions are modeled as folded Gaussian distributions, or wherein the method further comprises:

comparing each probability with a confidence threshold; and

determining if a speaker associated with a probability has spoken based on the comparing.

12. The method of any one of claims 1-11, further comprising:
generating one or more analytics files or visualizations associated with the media data based in part on the assigned speaker labels.

13. A method comprising:

receiving, with at least one processor, media data including one or more utterances;

dividing, with the at least one processor, the media data into a plurality of blocks;

identifying, with the at least one processor, segments of each block of the plurality of blocks associated with a single speaker;

extracting, with the at least one processor, embeddings for the identified segments in accordance with a machine learning model;

spectral clustering, with the at least one processor, the embeddings for the identified segments into clusters;

assigning, with the at least one processor, a speaker label to at least one of the embeddings for the identified segments in accordance with a result of the clustering; and

outputting, with the at least one processor, speaker diarization information associated with the media data based in part on the speaker labels,

the method further comprising:

before dividing the media data into a plurality of blocks, performing, with the at least one processor, a spatial conversion on the media data,

wherein performing the spatial conversion on the media data comprises:

converting a first plurality of channels of the media data into a second plurality of channels different than the first plurality of channels; and

dividing the media data into a plurality blocks includes independently dividing each of the second plurality of channels into blocks.

14. A non-transitory computer-readable storage medium storing at least one program for execution by at least one processor of an electronic device, the at least one program including instructions for performing the method of any one of claims 1-13.

15. A system comprising:

at least one processor; and

a memory coupled to the at least one processor storing at least one program for execution by the at least one processor, the at least one program including instructions for performing the method of any one of claims 1-13.

**Patentansprüche**

1. Verfahren umfassend:

   Empfangen mit mindestens einem Prozessor von Mediendaten, die eine oder mehrere Äußerungen beinhalten;
   Aufteilen mit dem mindestens einen Prozessor der Mediendaten in eine Vielzahl von Blöcken;
   Identifizieren mit dem mindestens einen Prozessor von Segmenten jedes Blocks der Vielzahl von Blöcken, die einem einzelnen Lautsprecher zugeordnet sind;
   Extrahieren mit dem mindestens einen Prozessor von Einbettungen für die identifizierten Segmente gemäß einem maschinellen Lernmodell, wobei Extrahieren von Einbettungen für identifizierte Segmente weiter statistisch Kombinieren extrahierter Einbettungen für identifizierte Segmente umfasst, die einer jeweiligen kontinuierlichen einem einzelnen Lautsprecher zugeordneten Äußerung entsprechen;
   Clustern mit dem mindestens einen Prozessor der Einbettungen für die identifizierten Segmente in Cluster;
   Zuweisen mit dem mindestens einen Prozessor einer Lautsprecherbezeichnung zu mindestens einer der Einbettungen für die identifizierten Segmente gemäß einem Ergebnis des Clusterns; und
   Ausgeben mit dem mindestens einen Prozessor von Lautsprecher-Diarisierungsinformationen, die den Mediendaten zugeordnet sind teilweise auf den Lautsprecherbezeichnungen basierend, wobei das Verfahren weiter umfasst:
   vor dem Aufteilen der Mediendaten in eine Vielzahl von Blöcken Durchführen mit dem mindestens einen Prozessor einer räumlichen Umwandlung der Mediendaten, wobei das Durchführen der räumlichen Umwandlung der Mediendaten umfasst:

   Umwandeln einer ersten Vielzahl von Kanälen der Mediendaten in eine zweite Vielzahl von Kanälen, die sich von der ersten Vielzahl von Kanälen unterscheiden; und
   Aufteilen der Mediendaten in eine Vielzahl von Blöcken unabhängiges Aufteilen jedes der zweiten Vielzahl von Kanälen in Blöcke beinhaltet.

2. Verfahren nach Anspruch 1, weiter umfassend:

   gemäß einer Bestimmung, dass die Mediendaten einem ersten Medientyp entsprechen, wird das maschinelle Lernmodell aus einem ersten Satz von Trainingsdaten generiert; und
   gemäß einer Bestimmung, dass die ersten Mediendaten einem zweiten Medientyp entsprechen, der sich vom ersten Medientyp unterscheidet, wird das maschinelle Lernmodell aus einem zweiten Satz von Trainingsdaten generiert; und, der sich vom ersten Satz von Trainingsdaten unterscheidet.

3. Verfahren nach einem der Ansprüche 1-2, weiter umfassend:

   vor dem Clustern und gemäß einer Bestimmung, dass ein Optimierungskriterium erfüllt ist, weiter Optimieren der extrahierten Einbettungen für die identifizierten Segmente,
   wobei das Verfahren optional weiter umfasst:
   vor dem Clustern und gemäß einer Bestimmung, dass ein Optimierungskriterium nicht erfüllt ist, Verzichten auf weiteres Optimieren der extrahierten Einbettungen für die identifizierten Segmente.

4. Verfahren nach Anspruch 3, wobei Optimieren der extrahierten Einbettungen für identifizierte Segmente mindestens eines von Dimensionlitätsreduktion der extrahierten Einbettungen oder Einbettungsoptimierung der extrahierten Einbettungen beinhaltet,
   wobei Einbettungsoptimierung optional beinhaltet:

   Trainieren des maschinellen Lernmodells zur Maximierung von Trennbarkeit zwischen den extrahierten Einbettungen für identifizierte Segmente; und
   Aktualisieren der extrahierten Einbettungen durch Anwenden des maschinellen Lernmodells zur Maximierung der Trennbarkeit zwischen den extrahierten Einbettungen für identifizierte Segmente auf die extrahierten Einbettungen identifizierter Segmente.

**5.** Verfahren nach einem der Ansprüche 1-4, wobei das Clustern umfasst:
für jedes identifizierte Segment:

Bestimmen einer jeweiligen Länge des Segments;
gemäß einer Bestimmung, dass die jeweilige Länge des Segments größer als eine Schwellenwertlänge ist, Zuweisen der dem jeweiligen identifizierten Segment zugeordneten Einbettungen gemäß einem ersten Cluster-Prozess; und
gemäß einer Bestimmung, dass die jeweilige Länge des Segments nicht größer als eine Schwellenwertlänge ist, Zuweisen der dem jeweiligen identifizierten Segment zugeordneten Einbettungen gemäß einem zweiten Cluster-Prozess, der sich vom ersten Cluster-Prozess unterscheidet.

**6.** Verfahren nach einem der Ansprüche 1-5, weiter umfassend:
Auswählen eines ersten Cluster-Prozesses aus einer Vielzahl von Cluster-Prozessen, die teilweise auf einer Bestimmung einer Menge unterschiedlicher Lautsprecher basiert, die den Mediendaten zugeordnet sind.

**7.** Verfahren nach einem der Ansprüche 1-6, wobei der erste Cluster-Prozess spektrales Clustern beinhaltet.

**8.** Verfahren nach einem der Ansprüche 1-6, wobei die Mediendaten eine Vielzahl zugehöriger Dateien beinhalten, wobei das Verfahren optional weiter umfasst:
Auswählen einer Vielzahl der zugehörigen Dateien als Mediendaten, wobei Auswählen der Vielzahl der zugehörigen Dateien teilweise auf mindestens einem basiert von:

einer inhaltlichen Ähnlichkeit, die der Vielzahl zugehöriger Dateien zugeordnet ist;
eine Metadaten-Ähnlichkeit, die der Vielzahl zugehöriger Dateien zugeordnet ist; oder
empfangene Daten, die einer Anfrage zur Verarbeitung eines bestimmten Satzes von Dateien entsprechen.

**9.** Verfahren nach Anspruch 8, wobei das maschinelle Lernmodell aus einer Vielzahl von maschinellen Lernmodellen gemäß einer oder mehrerer Eigenschaften ausgewählt wird, die durch jede der Vielzahl von zugehörigen Audiodateien geteilt werden.

**10.** Verfahren nach Anspruch 1, weiter umfassend:

Berechnen einer Abstandsmetrik für den Stimmabdruck zwischen einer Stimmabdruck-Einbettung und einem Referenzpunkt jedes Clusters;
Berechnen eines Abstands von jedem Referenzpunkt zu jeder Einbettung, die diesem Cluster angehört;
Berechnen für jeden Cluster einer Wahrscheinlichkeitsverteilung der Abstände der Einbettungen vom Referenzpunkt dieses Clusters;
für jede Wahrscheinlichkeitsverteilung Berechnen einer Wahrscheinlichkeit, dass der Stimmabdruckabstand dieser Wahrscheinlichkeitsverteilung angehört;
Erstellen einer Rangfolge der Wahrscheinlichkeiten;
Zuweisen des Stimmabdrucks zu einem der Cluster basierend auf der Rangfolge; und
Kombinieren einer Lautsprecheridentität, die dem Stimmabdruck zugeordnet ist, mit den Lautsprecher-Diarisierungsinformationen.

**11.** Verfahren nach Anspruch 10, wobei die Wahrscheinlichkeitsverteilungen als gefaltete Gaußverteilungen modelliert werden, oder wobei das Verfahren weiter umfasst:

Vergleichen jeder Wahrscheinlichkeit mit einem Konfidenzschwellenwert; und
basierend auf dem Vergleichen Bestimmen, ob ein Lautsprecher, der einer Wahrscheinlichkeit zugeordnet ist, gesprochen hat.

**12.** Verfahren nach einem der Ansprüche 1-11, weiter umfassend:
Generieren einer oder mehrerer Analysedateien oder Visualisierungen, die den Mediendaten zugeordnet sind, teilweise basierend auf den zugewiesenen Lautsprecherbezeichnungen.

**13.** Verfahren umfassend:

Empfangen mit mindestens einem Prozessor von Mediendaten, die eine oder mehrere Äußerungen beinhalten;

Aufteilen mit dem mindestens einen Prozessor der Mediendaten in eine Vielzahl von Blöcken;

Identifizieren mit dem mindestens einen Prozessor von Segmenten jedes Blocks der Vielzahl von Blöcken, die einem einzelnen Lautsprecher zugeordnet sind;

Extrahieren mit dem mindestens einen Prozessor von Einbettungen für die identifizierten Segmente gemäß einem maschinellen Lernmodell;

spektrales Clustern mit dem mindestens einen Prozessor der Einbettungen für die identifizierten Segmente in Cluster;

Zuweisen mit dem mindestens einen Prozessor einer Lautsprecherbezeichnung zu mindestens einer der Einbettungen für die identifizierten Segmente gemäß einem Ergebnis des Clusterns; und

Ausgeben mit dem mindestens einen Prozessor von Lautsprecher-Diarisierungsinformationen, die den Mediendaten zugeordnet sind teilweise auf den Lautsprecherbezeichnungen basierend,

wobei das Verfahren weiter umfasst:

vor dem Aufteilen der Mediendaten in eine Vielzahl von Blöcken Durchführen mit dem mindestens einen Prozessor einer räumlichen Umwandlung der Mediendaten, wobei das Durchführen der räumlichen Umwandlung der Mediendaten umfasst:

Umwandeln einer ersten Vielzahl von Kanälen der Mediendaten in eine zweite Vielzahl von Kanälen, die sich von der ersten Vielzahl von Kanälen unterscheiden; und

Aufteilen der Mediendaten in eine Vielzahl von Blöcken unabhängiges Aufteilen jedes der zweiten Vielzahl von Kanälen in Blöcke beinhaltet.

14. Nichtflüchtiges, computerlesbares Speichermedium, das mindestens ein Programm zur Ausführung durch mindestens einen Prozessor einer elektronischen Vorrichtung speichert, wobei das mindestens eine Programm Anweisungen zum Durchführen des Verfahrens nach einem der Ansprüche 1-13 beinhaltet.

15. System, umfassend:

mindestens ein Prozessor; und

einen mit dem mindestens einen Prozessor gekoppelten Speicher, der mindestens ein Programm zur Ausführung durch den mindestens einen Prozessor speichert, wobei das mindestens eine Programm Anweisungen zum Durchführen des Verfahrens nach einem der Ansprüche 1-13 beinhaltet.

## Revendications

1. Procédé comprenant :

la réception, à l'aide d'au moins un processeur, de données multimédias incluant une ou plusieurs émissions de parole ;

la division, à l'aide du au moins un processeur, des données multimédias en une pluralité de blocs ;

l'identification, à l'aide du au moins un processeur, de segments de chaque bloc de la pluralité de blocs associés à un seul locuteur ;

l'extraction, à l'aide du au moins un processeur, de plongements vectoriels pour les segments identifiés conformément à un modèle d'apprentissage automatique, dans lequel l'extraction de plongements vectoriels pour les segments identifiés comprend en outre la combinaison statistique des plongements vectoriels extraits pour les segments identifiés qui correspondent à une émission de parole continue respective associée à un seul locuteur ;

le regroupement, à l'aide du au moins un processeur, des plongements vectoriels pour les segments identifiés en groupes ;

l'attribution, à l'aide du au moins un processeur, d'une étiquette de locuteur à au moins un des plongements vectoriels pour les segments identifiés, conformément à un résultat du regroupement ; et

la production en sortie, à l'aide du au moins un processeur, d'informations de segmentation et de regroupement en locuteurs associées aux données multimédias, basées en partie sur les étiquettes de locuteurs, le procédé comprenant en outre :

avant de diviser les données multimédias en une pluralité de blocs, l'exécution, à l'aide du au moins un processeur, d'une conversion spatiale sur les données multimédias, dans lequel l'exécution de la conversion spatiale sur les données multimédias comprend :

la conversion d'une première pluralité de canaux des données multimédias en une seconde pluralité de canaux différents de la première pluralité de canaux ; et

la division des données multimédias en une pluralité de blocs inclut la division indépendante de chacun de la seconde pluralité de canaux en blocs.

2. Procédé selon la revendication 1, comprenant en outre :

conformément à une détermination établissant que les données multimédia correspondent à un premier type de média, le modèle d'apprentissage automatique est généré à partir d'un premier ensemble de données de formation ; et

conformément à une détermination établissant que les premières données multimédias correspondent à un second type de média différent du premier type de média, le modèle d'apprentissage automatique est généré à partir d'un second ensemble de données de formation différent du premier ensemble de données de formation.

3. Procédé selon l'une quelconque des revendications 1-2, comprenant en outre :

avant le regroupement, et conformément à la détermination établissant qu'un critère d'optimisation est satisfait, l'optimisation supplémentaire des plongements vectoriels extraits pour les segments identifiés,

le procédé comprenant éventuellement en outre :

avant le regroupement, et conformément à la détermination établissant qu'un critère d'optimisation n'est pas satisfait, le renoncement à l'optimisation supplémentaire des plongements vectoriels extraits pour les segments identifiés.

4. Procédé selon la revendication 3, dans lequel l'optimisation des plongements vectoriels extraits pour les segments identifiés inclut l'exécution d'au moins une réduction de dimensionnalité des plongements vectoriels extraits ou d'une optimisation de plongements vectoriels des plongements vectoriels extraits,

dans lequel l'optimisation de plongements vectoriels inclut éventuellement :

la formation du modèle d'apprentissage automatique pour optimiser la séparabilité entre les plongements vectoriels extraits pour les segments identifiés ; et

la mise à jour des plongements vectoriels extraits, en appliquant le modèle d'apprentissage automatique pour optimiser la séparabilité entre les plongements vectoriels extraits pour les segments identifiés, vers les segments identifiés à plongements vectoriels extraits.

5. Procédé selon l'une quelconque des revendications 1-4, dans lequel le regroupement comprend :

pour chaque segment identifié :

la détermination d'une longueur respective du segment ;

conformément à une détermination établissant que la longueur respective du segment est supérieure à une longueur seuil, l'attribution des plongements vectoriels associés au segment identifié respectif selon un premier processus de regroupement ; et

conformément à une détermination établissant que la longueur respective du segment est inférieure ou égale à une longueur seuil, l'attribution des plongements vectoriels associés au segment identifié respectif selon un second processus de regroupement différent du premier processus de regroupement.

6. Procédé selon l'une quelconque des revendications 1-5, comprenant en outre :

la sélection d'un premier processus de regroupement parmi une pluralité de processus de regroupement, basée en partie sur la détermination d'une quantité de locuteurs distincts associés aux données multimédias.

7. Procédé selon l'une quelconque des revendications 1-6, dans lequel le premier processus de regroupement inclut un regroupement spectral.

8. Procédé selon l'une quelconque des revendications 1-6, dans lequel les données multimédias incluent une pluralité de fichiers connexes, éventuellement le procédé comprenant en outre :

la sélection d'une pluralité de fichiers connexes en tant que données multimédias, dans lequel la sélection de la pluralité de fichiers connexes est fondée en partie sur au moins un parmi :

une similarité de contenu associée à la pluralité de fichiers connexes ;

une similarité de métadonnées associée à la pluralité de fichiers connexes ; ou

des données reçues correspondant à une demande de traitement d'un ensemble spécifique de fichiers.

9. Procédé selon la revendication 8, dans lequel le modèle d'apprentissage automatique est sélectionné parmi une pluralité de modèles d'apprentissage automatique conformément à une ou plusieurs propriétés partagées par chacun de la pluralité de fichiers audio connexes.

10. Procédé selon la revendication 1, comprenant en outre :

le calcul d'une mesure de distance d'empreinte vocale entre un plongement vectoriel d'empreinte vocale et un point de référence de chaque groupe ;

le calcul d'une distance entre chaque point de référence et chaque plongement vectoriel appartenant à ce groupe ;

le calcul, pour chaque groupe, d'une distribution de probabilité des distances des plongements vectoriels par rapport au point de référence pour ce groupe ;

pour chaque distribution de probabilité, le calcul d'une probabilité que la distance d'empreinte vocale appartienne à la distribution de probabilité ;

le classement des probabilités ;

l'attribution de l'empreinte vocale à l'un des groupes en fonction du classement ; et

la combinaison d'une identité de locuteur associée à l'empreinte vocale avec les informations de segmentation et regroupement en locuteurs.

11. Procédé selon la revendication 10, dans lequel les distributions de probabilité sont modélisées comme des distributions gaussiennes repliées, ou dans lequel le procédé comprend en outre :

la comparaison de chaque probabilité à un seuil de confiance ; et

la détermination pour établir si un locuteur associé à une probabilité a pris la parole sur la base de la comparaison.

12. Procédé selon l'une quelconque des revendications 1-11, comprenant en outre :

la génération d'un ou plusieurs fichiers ou d'une ou plusieurs visualisations d'analyse associé(e)s aux données multimédias, basée en partie sur les étiquettes de locuteurs attribuées.

13. Procédé comprenant :

la réception, à l'aide d'au moins un processeur, de données multimédias incluant une ou plusieurs émissions de parole ;

la division, à l'aide du au moins un processeur, des données multimédias en une pluralité de blocs ;

l'identification, à l'aide du au moins un processeur, de segments de chaque bloc de la pluralité de blocs associés à un seul locuteur ;

l'extraction, à l'aide du au moins un processeur, de plongements vectoriels des segments identifiés conformément à un modèle d'apprentissage automatique ;

le regroupement spectral, à l'aide du au moins un processeur, des plongements vectoriels pour les segments identifiés en groupes ;

l'attribution, à l'aide du au moins un processeur, d'une étiquette de locuteur à au moins un des plongements vectoriels pour les segments identifiés, conformément à un résultat du regroupement ; et

la production en sortie, à l'aide du au moins un processeur, d'informations de segmentation et regroupement en locuteurs associées aux données multimédias, basées en partie sur les étiquettes de locuteurs,

le procédé comprenant en outre :

avant de diviser les données multimédias en une pluralité de blocs, l'exécution, à l'aide du au moins un processeur, d'une conversion spatiale sur les données multimédias, dans lequel l'exécution de la conversion spatiale sur les données multimédias comprend :

la conversion d'une première pluralité de canaux de données multimédias en une seconde pluralité de canaux différents de la première pluralité de canaux ; et

la division des données multimédias en une pluralité de blocs inclut la division indépendante de chacun de la seconde pluralité de canaux en blocs.

14. Support de stockage non transitoire lisible par ordinateur stockant au moins un programme destiné à être exécuté par au moins un processeur d'un dispositif électronique, le au moins un programme incluant des instructions pour exécuter le procédé selon l'une quelconque des revendications 1-13.

15. Système comprenant :

au moins un processeur ; et
une mémoire couplée à au moins un processeur stockant au moins un programme destiné à être exécuté par le au moins un processeur, le au moins un programme incluant des instructions pour exécuter le procédé selon l'une quelconque des revendications 1-13.

FIG. 1

101

100

**AUDIO PREPROCESSING**

| AUDIO IMPORT | | STEREO TO SINGLE CHANNEL CONVERSION |

106

108 107

AUDIO BLOCK SEGMENTATION

BLOCKS OF AUDIO CHANNEL 1

BLOCKS OF AUDIO CHANNEL 2

**BLOCK BASED EMBEDDINGS EXTRACTION**

CHANNEL I

CHANNEL II

FEATURE EXTRACTION

109   110

113

VOICE ACTIVITY DETECTION

VOICE ACTIVITY DETECTION

OVERLAPPED SPEECH DETECTION

SPEAKER SPEECH DETECTION

111   112

EMBEDDINGS EXTRACTION

EMBEDDINGS

102   103

**EMBEDDINGS PROCESSING**

DIMENSIONALITY REDUCTION

114   115

EMBEDDINGS IMPROVEMENT

IMPROVED EMBEDDINGS

**CLUSTERING**
104

SHORT SEGMENTS IDENTIFICATION
116

LONG SEGMENTS CLUSTERING

118   117

SHORT SEGMENTS CLUSTERING

CLUSTERED EMBEDDINGS

POST PROCESSING

120

119

SEGMENTATION

105   122   121

ANALYTICS

VISUALIZATIONS

FIG. 2A

TO FIG. 2B

EP 4 330 965 B1

SPEECH SEGMENTS

SEGM 1

SEGM2

SEGM3

SEGM4

SEGM5

SEGM6

SEGM7

EMBEDDINGS EXTRACTION

o o o

o o o

EMBEDDINGS SEGMENT 1

o o o

EMBEDDINGS SEGMENT 4

o o o

EMBEDDINGS SEGMENT 7

AVERAGING

AVERAGING

AVERAGING

EMBEDDINGS AVERAGING

AVERAGED EMBEDDINGS BLOCK 1

AVERAGED EMBEDDINGS BLOCK 2

AVERAGE EMBEDDINGS BLOCK 3

CLUSTERING

FIG. 2B

EP 4 330 965 B1

## FIG. 3

## FIG. 4A

400a

| a |
| --- |
| 401a — SincCONV |
| 402a — CONVOLUTIONAL LAYERS |
| 403a — RECURRENT LAYERS |
| 404a — FEEDFORWARD LAYERS |

## FIG. 4B

400b

| b |
| --- |
| SincCONV — 401b |
| CONVOLUTIONAL LAYERS — 402b |
| RECURRENT LAYERS — 403b |
| TEMPORAL POOLING — 404b |
| FEEDFORWARD LAYERS — 405b |

FIG. 5B

FIG. 5A

FIG. 6

700

INPUT EMBEDDINGS

701

$x_1$  $x_2$  $x_3$  $x_4$  ∘ ∘ ∘  $x_n$

702

POSITIONAL
ENCODING

703

704

TRAINING
PROCESS

705 — MULTI-HEAD
ATTENTION

706 — TEMPORAL POOLING → GENERALIZED
END-TO-END LOSS ~707

708 — SIMILARITY MATRIX

709 — CLUSTERING

FIG. 7

800

801 — EXTRACT EMBEDDINGS FOR
EACH SPEECH SEGMENT

802

SPEECH
SEGMENT DURATION
≥ Thr?

NO

YES

803 — CLUSTER SEGMENT
EMBEDDINGS

804 — COMPUTE CENTER
OF EACH CLUSTER

COMPUTE COSINE DISTANCE BETWEEN
SHORT SEGMENT EMBEDDINGS WITH
CLUSTER CENTERS — 805

ASSIGN SHORT SPEECH SEGMENT
TO THE CLOSEST CLUSTER — 806

807 — MERGE CLUSTERING
RESULTS

END

FIG. 8

EMBEDDINGS SPACE

FIG. 9

FIG. 11

FIG. 10

FIG. 12

FIG. 13

FIG. 14

1501 — RECEIVING FIRST MEDIA DATA
INCLUDING UTTERANCE(S)

1502 — DIVIDING FIRST MEDIA ITEMS INTO BLOCKS

1503 — IDENTIFYING SEGMENTS OF BLOCKS
ASSOCIATED WITH A SINGLE SPEAKER

1504 — EXTRACTING EMBEDDINGS FOR IDENTIFIED
SEGMENTS IN ACCORDANCE WITH MODEL

1505 — CLUSTERING EMBEDDINGS
FOR IDENTIFIED SEGMENTS

1506 — ASSIGNING SPEAKER LABEL TO EACH
EMBEDDING FOR IDENTIFIED SEGMENTS IN
ACCORDANCE WITH RESULT OF CLUSTERING

1500

FIG. 15

1600

| 1601 CPU | 1602 ROM | 1603 RAM |

1604

1605 I/O INTERFACE

| 1606 INPUT UNIT | OUTPUT UNIT 1607 | STORAGE UNIT 1608 | COMMUNICATION UNIT 1609 | DRIVE 1610 |

REMOVABLE MEDIUM 1611

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63182338
- US 20160217792 A
- US 20200349230 A

**Non-patent literature cited in the description**

- **VAN DER MAATEN ; LAURENS ; GEOFFREY HINTON**. Visualizing data using t-SNE. *Journal of machine learning research*, 2008, vol. 9 (11)
- **RAVANELLI, M. ; BENGIO, Y.** Speaker Recognition from Raw Waveform with SincNet. 2018 IEEE Spoken Language Technology Workshop. *SLT 2018 - Proceedings*, 2019, 1021-1028
- **WANG, Q ; DOWNEY, C ; WAN, L ; MANSFIELD, P. A. ; MORENO, I. L.** c Speaker diarization with LSTM. *ICASSP, IEEE International Conference on Acoustics, Speech and Signal Processing - Proceedings*, April 2018, 5239-5243
- **LANDINI ; FEDERICO ; JÁN PROFANT ; MIREIA DIEZ ; LUKÁŠ BURGET**. Bayesian HMM clustering of x-vector sequences (VBx) in speaker diarization: theory, implementation and analysis on standard tasks. *Computer Speech & Language*, 2022, vol. 71, 101254